# EUROPÄISCHE PATENTSCHRIFT

(11) **EP 3 372 540 B1**
(45) Veröffentlichungstag und Bekanntmachung des Hinweises auf die Patenterteilung: **01.10.2025**
(21) Anmeldenummer: 17160367.3
(22) Anmeldetag: 10.03.2017
(51) Int. Cl.: B65G 47/51, B65G 57/30

(54) **SYSTEM UND VERFAHREN ZUM STAPELN UND ENTSTAPELN VON LADUNGSTRÄGERN**
SYSTEM AND METHOD FOR STACKING AND UNSTACKING LOAD CARRIERS
SYSTÈME ET PROCÉDÉ D'EMPILAGE ET DE DÉSEMPILAGE DE PLATEAUX DE CHARGEMENT

(43) Veröffentlichungstag der Anmeldung: 12.09.2018
(73) Patentinhaber: Siemens Logistics GmbH, 90429 Nürnberg (DE)
(72) Erfinder: MUECK, Bengt, 32760 Detmold (DE); SCHWINGE, Christian, Oliver, 90556 Cadolzburg (DE)
(74) Vertreter: Siemens Patent Attorneys

(56) Entgegenhaltungen:
- EP-A1- 0 143 945
- EP-A1- 2 700 597
- DE-A1- 3 439 976
- FR-A1- 2 543 513
- JP-A- H05 132 064
- JP-A- H09 202 440
- JP-U- H 041 837

## Beschreibung

Die vorliegende Erfindung betrifft das technische Gebiet der Handhabung von Ladungsträgern zur Aufnahme von Gütern in einem Fördersystem, insbesondere die Handhabung von Transportbehältern für Gepäckstücke in Flughafen-Gepäckförderanlagen.

An Flughäfen werden Transportbehälter zum Transport von Gepäckstücken verwendet. Diese Transportbehälter werden beladen und nach Benutzung entladen. Leere Transportbehälter müssen in Perioden, in denen Sie nicht benutzt werden, gelagert werden. Wenn Transportbehälter zum Speichern gestapelt werden, reduziert sich der benötigte Raumbedarf. Hierfür sind Stapler und Entstapler bekannt. Leere Transportbehälter werden in einen Stapler gefördert, der Stapel baut. Diese Stapel werden gelagert. Bei Leerbehälterbedarf werden die Stapel in einen Entstapler gefahren. Dieser vereinzelt die Transportbehälter zur Verwendung.

Bisherige Stapler und Entstapler verwenden Mechaniken, die einen Stapel von zwei Seiten angreifen. Der Stapler hebt den bisherigen Stapel von beiden Seiten und der nächste Transportbehälter fährt darunter. Der bisherige Stapel wird auf den neuen Transportbehälter gesetzt. Der Stapler greift unter den neuen Transportbehälter und hebt den Stapel an. Der Vorgang beginnt vom Anfang an bis der Stapel seine maximale Bauhöhe erreicht hat. Der volle Stapel wird aus dem Stapler gefördert und der nächste Stapel kann gebaut werden. Der Entstapelvorgang erfolgt in umgekehrter Reihenfolge.

Der Zugriff von zwei Seiten erfordert ein Abstützen der Konstruktion auf beiden Seiten. Auch wird Platz auf beiden Seiten der Behälterförderlinien benötigt, so dass sich der Abstand von Behälterförderlinien verbreitert. Auf jeder Seite wird wenigstens ein Trage- bzw. Hebeelement eingesetzt, in der Praxis meist jedoch zwei, um die Transportbehälter zu heben. Es müssen wenigstens zwei Trageelemente vorhanden sein. Wird ein Stapel auf einen Transportbehälter gesenkt, müssen die Trageelemente unter dem neuen untersten Transportbehälter gebracht werden. Neben der Hubbewegung müssen diese Trageelemente eine Umgreifbewegung ausführen können. Die Hebeelemente müssen um den Transportbehälter herumgeführt werden. Hierbei müssen beide Seiten synchron arbeiten. Werden getrennte Motoren eingesetzt, ist eine Steuerung zur Synchronisation erforderlich. Alternativ kann eine mechanische Synchronisation erfolgen. Die Synchronisation muss sowohl für die Hebebewegung als auch für die Umgreifbewegung durchgeführt werden.

Stapler und Entstapler werden über einen Förderabschnitt gestellt. Sie stützen sich auf beiden Seiten der Fördertechnik oder auf der Fördertechnik direkt ab und haben getrennte, aber synchronisierte Hubmotoren oder einen mechanische Übertrieb. Die Umgreifbewegung wird mit dem Hubmotor und weiteren Motoren durchgeführt. Oftmals rotieren die weiteren Motoren die Hebelemente aus dem Bereich der Transportbehälter.

Das Dokument FR 2 543 513 A1 offenbart ein System zum Stapeln und/ oder Entstapeln von Ladungsträgern, umfassend
a) eine Förderbahn, auf der die Ladungsträger einzeln sowie gestapelt entlang einer Förderrichtung förderbar sind;
b) eine seitlich der Förderbahn angeordnete Hubvorrichtung für die Ladungsträger, wobei die Hubvorrichtung zwei Eingriffelemente umfasst, die mit den Ladungsträgern in Eingriff bringbar sind; und
c) eine Steuerung, die adaptiert ist, die Förderbahn und die Hubvorrichtung so anzusteuern, dass die Ladungsträger an einer Anhaltposition relativ zur Hubvorrichtung angehalten werden und die Eingriffelemente in Eingriff gebracht werden wahlweise mit einem unmittelbar auf der Förderbahn aufliegenden angehaltenen Ladungsträger oder einem nicht unmittelbar auf der Förderbahn aufliegenden Ladungsträger eines Stapels von Ladungsträgern; wobei
   - die Förderbahn zwei Unterbrüche zum Passieren der Eingriffelemente aufweist, wobei die Unterbrüche jeweils groß genug dimensioniert sind, um die Eingriffelemente aufzunehmen und unter die Förderbahn abzusenken;
   - das System einen ansteuerbaren Hubantrieb aufweist, der ausgestaltet ist, die Höhe der Eingriffelemente zu verändern, wobei die Konstruktion eine vertikale Bewegung der Eingriffelemente erlaubt;
   - ein horizontaler Abstand der Eingriffelemente zueinander veränderbar ist, um die Eingriffelemente mit einem Ladungsträger in Eingriff zu bringen, wobei die Eingriffelemente eine Ruheposition und eine Eingriffposition aufweisen, wobei die Eingriffelemente in der Eingriffposition näher aneinander positioniert sind als in der Ruheposition, wobei die Eingriffelemente in der Ruheposition mit einem Abstand zueinander angeordnet sind, der größer ist als die Ausdehnung eines Ladungsträgers, so dass die Eingriffelemente hindernisfrei vertikal um einen in der Anhaltposition befindlichen Ladungsträger bewegt werden können;
   - das System einen ansteuerbaren Antrieb aufweist, der ausgestaltet ist, den horizontalen Abstand der Eingriffelemente zueinander zu verändern.

Der vorliegenden Erfindung liegt daher die Aufgabe zugrunde, eine Verbesserung gegenüber dem Stand der Technik zu erzielen. Diese Aufgabe wird durch die in den unabhängigen Ansprüchen beschriebenen Lösungen gelöst.

Die erfindungsgemäße Lösung sieht ein System zum Stapeln und/oder Entstapeln von Ladungsträgern, beispielsweise Transportbehältern , gemäß Anspruch 1 vor. Das System umfasst eine Förderbahn, auf der die Ladungsträger einzeln sowie gestapelt entlang einer Förderrichtung förderbar sind. Das System umfasst eine seitlich der Förderbahn angeordnete Hubvorrichtung für die Ladungsträger, wobei die Hubvorrichtung zwei Eingriffelemente umfasst, die mit den Ladungsträgern in Eingriff bringbar sind. Und das System umfasst eine Steuerung, die adaptiert ist, die Förderbahn und/oder die Hubvorrichtung so anzusteuern, dass die Ladungsträger an einer Anhaltposition relativ zur Hubvorrichtung angehalten werden und die Eingriffelemente in Eingriff gebracht werden wahlweise mit einem unmittelbar auf der Förderbahn aufliegenden angehaltenen Ladungsträger sowie einem nicht unmittelbar auf der Förderbahn aufliegenden Ladungsträger eines Stapels von Ladungsträgern.

Wenn der mit den Eingriffelementen in Eingriff gebrachte Ladungsträger nicht der oberste Ladungsträger eines Stapels von Ladungsträgern ist, liegen dem mit den Eingriffelementen in Eingriff gebrachte Ladungsträgern ein oder mehr weitere Ladungsträger auf. Die vertikale Positionierung der Eingriffelemente, um diese in Eingriff mit dem Ladungsträger zu bringen, wird bestimmt von der vertikalen Positionierung des betreffenden Ladungsträgers. Mit dem System kann ein Stapel von Ladungsträgern gestapelt und/oder entstapelt werden. Die seitliche Anordnung der Hubvorrichtung kann besonders platzsparend konstruiert werden.

Unter einer seitlichen Anordnung soll insbesondere eine einseitige Anordnung der Hubvorrichtung verstanden werden, die Hubvorrichtung steht also auf einer ersten Seite neben der Förderbahn. Diese Anordnung erfordert einen geringen Platzbedarf, da kein Bauraum auf der zweiten Seite der Förderbahn benötigt wird und erlaubt zudem eine besonders einfache Ausgestaltung der Hubvorrichtung. Im Gegensatz zu einer auf zwei gegenüberliegenden Seiten der Förderbahn angeordneten Hubvorrichtung ist keine Synchronisation der Komponenten der gegenüberliegenden Seiten zur Durchführung der vertikalen Hubbewegung erforderlich. Eine einseitig seitlich neben der Förderbahn angeordnete Hubvorrichtung kann unkompliziert im Boden verankert und/oder mit einem besonders schweren Stützfuß umfallsicher und somit besonders stabil montiert bzw. aufgebaut werden.

Unter einem Ladungsträger sollen tragende Mittel zur Aufnahme von einem oder mehreren Gütern zu einer Ladeeinheit verstanden werden. Vorzugsweise sind die Ladungsträger Transportbehälter. Ein vorteilhafter Anwendungsbereich des Systems sind Flughafen-Gepäckfördereinheiten, da diese häufig einen asymmetrischen Bedarf an Ladungsträgern aufweisen und Zeiten hoher und niedriger Auslastung einander abwechseln.

Das System kann beispielsweise eine Flughafen-Gepäckförderanlage sein oder als System zum Stapeln und/oder Entstapeln von Ladungsträgern in einer Flughafen-Gepäckförderanlage installierbar sein. Die Ladungsträger werden beim Check-In mit Gepäckstücken beladen und an einem Förderbandende entladen, um auf einem Gepäcktransportwagen hin zu einem Flugzeug transportiert zu werden. Leere Ladungsträger werden mit Gepäckstücken ankommender Flugzeuge beladen, meist jedoch an anderer Position der Flughafen-Gepäckförderanlage. Meist ist der Bedarf an leeren Transportbehältern asymmetrisch und die Auslastung der Flughafen-Gepäckförderanlage schwankt häufig stark, so dass leere Ladungsträger von einem Förderbandende hin zum Check-In oder umgekehrt transportiert werden müssen. Das System kann zum Stapeln und/oder Entstapeln leerer und/oder mit Gepäckstücken oder anderen Gütern befüllten Ladungsträgern ausgestaltet sein.

Das System kann auch in anderen Bereichen der Logistik zum Einsatz kommen, beispielsweise in Postsortieranlagen.

Unter Eingriffelementen im Sinne der Erfindung sollen auch miteinander verbunden ausgestaltete Eingriffelemente verstanden werden, die ein in Eingriff bringen mit dem Ladungsträger ermöglichen. Die Eingriffelemente können, müssen aber einander konstruktiv und bezüglich ihrer Aufgabe beim in Eingriff bringen nicht ähneln. Es ist beispielsweise möglich, dass nur eines der Eingriffelemente beweglich ausgestaltet ist.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um ein in Eingriff bringen zu erleichtern, können die Eingriffelemente so angeordnet sein, dass sie entlang einer Kante eines an der Anhaltposition auf der Förderbahn aufliegenden Ladungsträgers ausgerichtet sind.

Erfindungsgemäß sind die Eingriffelemente senkrecht zur Förderrichtung angeordnet sein. So kann eine Ausrichtung der Ladungsträger senkrecht oder entlang der Eingriffelemente erzielt werden, indem die Ladungsträger senkrecht oder entlang der Förderrichtung ausgerichtet werden.

Erfindungsgemäß ist ein horizontaler Abstand der Eingriffelemente zueinander veränderbar , um die Eingriffelemente mit einem Ladungsträger in Eingriff zu bringen. Die Eingriffelemente weisen hierbei eine Ruheposition und eine Eingriffposition auf, wobei die Eingriffelemente in der Eingriffposition näher aneinander positioniert sind als in der Ruheposition. Um die Eingriffelemente an einem Ladungsträger in der Anhaltposition vorbei führen zu können, ist der Abstand der Eingriffelemente in der Ruheposition ist größer als die Ausdehnung des Ladungsträgers in der Ruheposition.

Das System weist einen ansteuerbaren Antrieb auf, der ausgestaltet ist, den horizontalen Abstand der Eingriffelemente zueinander zu verändern. Die Steuerung kann adaptiert sein, den Antrieb anzusteuern, um den oder die Eingriffelemente zu bewegen und so den horizontalen Abstand der Eingriffelemente zu verändern. Das in Eingriff bringen erfordert so nur einen einzigen Antrieb und keine Synchronisation mehrerer Antriebe. Im Vergleich zu mehreren Antrieben ist ein einziger Antrieb zudem ausfallsicherer.

Um die Ladungsträger ungestört von den Eingriffelementen entlang der Förderbahn zu fördern und um die Eingriffelemente optimal zu positionieren, um sie mit einem Ladungsträger in Eingriff zu bringen, sind die Eingriffelemente unterhalb der auf der Förderbahn aufliegenden Ladungsträger positionierbar .

Um die Eingriffelemente auf einfache Weise unter die Förderbahn abzusenken, weist die Förderbahn zwei Unterbrüche zum Passieren der Eingriffelemente auf. Die jeweiligen Unterbrüche müssen hierbei groß genug dimensioniert sein, um das entsprechende Eingriffelement aufzunehmen.

Erfindungsgemäß umfasst die Hubvorrichtung einen Mast , an welchem die Eingriffelemente vertikal beweglich montiert sein können. Der Mast kann einfach auf dem Boden verankert und so fest positioniert werden werden, bei stabiler Ausführung der Förderbahn ist jedoch auch eine Befestigung auf der oder zumindest direkt an der Förderbahn möglich.

Das System weist einen ansteuerbaren Hubantrieb auf, der ausgestaltet ist, die Höhe der Eingriffelemente zu verändern. Die Steuerung kann adaptiert sein, den Hubantrieb anzusteuern.

Das System kann zudem eine Sensoreinheit umfassen, die ausgestaltet ist, die Ladungsträger auf dem System zu erfassen. Um ein reibungsloses in Eingriff bringen zu ermöglichen, kann insbesondere vor dem in Eingriff bringen eine korrekte Positionierung der Ladungsträger in der Anhaltposition erfasst und von der Steuerung überprüft werden. Zudem kann die Steuerung ausgestaltet sein, in Abhängigkeit von dem Erfassungsergebnis der Sensoreinheit ein Stapeln bzw. Entstapeln durchzuführen.

Gemäß einer Ausführungsform kann die Steuerung adaptiert sein, den Antrieb und den Hubantrieb synchronisiert in Abhängigkeit von den Ladungsträgern im System anzusteuern. Dies ermöglicht es, ein unnötiges Transportieren leerer Ladungsträger im System zu reduzieren. Um eine effiziente Berechnung zu ermöglichen, kann die Steuerung hierzu ein Logikmodul umfassen.

Hinsichtlich eines Verfahrens wird die vorstehend genannte Aufgabe gelöst durch ein Verfahren zum Stapeln und/oder Entstapeln von Ladungsträgern, beispielsweise Transportbehältern, mit einem System, umfassend eine seitlich der Förderbahn angeordnete Hubvorrichtung für die Ladungsträger, wobei die Hubvorrichtung zwei Eingriffelemente umfasst, die mit den Ladungsträgern in Eingriff bringbar sind. Das Verfahren umfasst die Verfahrensschritte:
a) Ein unmittelbar auf einer Förderbahn aufliegender Ladungsträger wird einzeln oder gestapelt entlang einer Förderrichtung der Förderbahn gefördert.
b) Die Förderbahn wird angehalten, wenn sich der unmittelbar auf der Förderbahn aufliegende Ladungsträger an einer Anhaltposition befindet.
c) Die Eingriffelemente werden in Eingriff gebracht wahlweise mit dem unmittelbar auf der Förderbahn aufliegenden Ladungsträger oder einem nicht unmittelbar auf der Förderbahn aufliegenden Ladungsträger eines Stapels von Ladungsträgern.
d) Die Hubvorrichtung bewegt den mit den Eingriffelementen in Eingriff gebrachten Ladungsträger vertikal.
e) Die Hubvorrichtung stoppt die vertikale Bewegung des mit den Eingriffelementen in Eingriff gebrachten Ladungsträgers.
f) Die Eingriffelemente lösen den Eingriff mit dem Ladungsträger.

Um die Eingriffelemente mit dem Ladungsträger in Eingriff zu bringen, kann ein horizontaler Abstand der Eingriffelemente zueinander verringert werden. Mit einer unkompliziert durchführbaren Aktorik und Bewegung der Eingriffelemente kann so ein Ladungsträger an die Hubvorrichtung gekoppelt werden.

Gemäß einer weiteren Ausführungsform können die Eingriffelemente unterhalb der auf der Förderbahn aufliegenden Ladungsträger positioniert sein, bevor die Eingriffelemente mit dem Ladungsträger in Eingriff gebracht werden. So müssen die Eingriffelemente nur eine geringe Hubdistanz, also eine nur geringe vertikale Bewegung, überwinden, um optimal für das in Eingriff bringen positioniert zu werden. Dies insbesondere, wenn ein unmittelbar auf der Förderbahn aufliegender Ladungsträger, in einem Stapel also der zuunterst positionierte Ladungsträger, mit den Eingriffelementen in Eingriff gebracht werden soll. Auch bei sehr hoher Stapelhöhe ist ein Stapeln und Entstapeln so mit dem Zurücklegen einer geringen Hubdistanz verbunden.

Um einen weiteren Aufbau bzw. Abbau des Stapels zu erzielen, kann ein weiterer Ladungsträger von der Förderbahn befördert werden, während der mit den Eingriffelementen in Eingriff gebrachten Ladungsträger von den Eingriffelementen gehalten wird. Um einen weiteren Aufbau bzw. Abbau des Stapels zu erzielen, kann der weitere Ladungsträger kann hin zu der bzw. weg von der Anhaltposition befördert werden.

Ausführungsformen der Erfindung werden nachfolgend anhand der Figuren beispielsweise näher erläutert. Dabei zeigen:
- Figur 1a: schematisch ein nicht erfindungsgemäßes System aus der Vogelperspektive;
- Figur 1b: schematisch ein erfindungsgemäßes System aus der Vogelperspektive;
- Figur 2: eine Ausführungsform des Systems mit einem Ladungsträger in der Anhaltposition, in Eingriff gebracht mit den Eingriffelementen aus der Vogelperspektive;
- Figur 3: das System von Figur 2 mit einem vor einem Unterbruch positionierten Ladungsträger;
- Figur 4: schrittweise die Bildung eines Stapels aus Ladungsträgern an der Anhaltposition; und
- Figur 5: der Beginn eines Entstapelns eines Stapels.

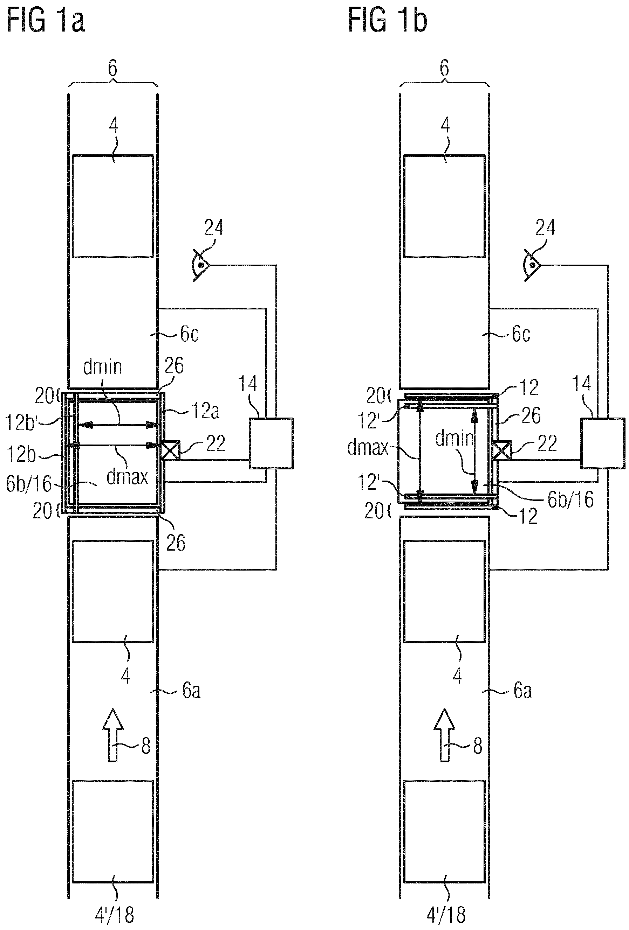

Figur 1a zeigt schematisch ein nicht erfindungsgemäßes System 2 aus der Vogelperspektive und Figur 1b zeigt ein erfindungsgemäßes System aus der Vogelperspektive. Das System 2 zeigt einen Ausschnitt einer Flughafen-Gepäckförderanlage. Auf einer Förderbahn 6 werden einzelne Ladungsträger 4 und ein Stapel 18 aus Ladungsträgern 4' entlang einer Förderrichtung 8 transportiert. Die Förderbahn 6 ist ansteuerbar und als umlaufendes Förderband ausgestaltet, welches ein Fördern entlang und entgegen der Förderrichtung 8 erlaubt. Gezeigt sind drei Förderbahnabschnitte 6a, 6b, 6c, wobei zwischen den Förderbahnabschnitten 6a, 6b bzw. 6b, 6c ein Spalt bzw. Unterbruch 20 besteht.

Figur 1a zeigt, wie rechts von der Förderbahn 6, also nur einseitig, eine Hubvorrichtung 10 angeordnet ist. Die Hubvorrichtung 10 umfasst einen ortsfesten Mast 22, zwei Eingriffelemente 12a, 12b und zwei die Eingriffelemente 12a, 12b verbindende Verbindungselemente 26. Die Ladungsträger 12a, 12b sind entlang den seitlichen Kanten der Ladungsträger 4 ausgerichtet, wobei die Ladungsträger 4 wiederum entlang der Förderrichtung 8 ausgerichtet sind. Die Hubvorrichtung 10 agiert als Hebe- und Absenkvorrichtung, das erste Eingriffelement 12a ist direkt und das zweite Eingriffelement 12b ist indirekt an dem Mast 22 montiert, wobei die Konstruktion eine vertikale Bewegung der Eingriffelemente 12a, 12b und der Verbindungselemente 26 erlaubt. Positionierung und Dimensionierung der Hubvorrichtung 10 bestimmen eine Anhaltposition 16 vor, die auf dem mittleren Förderbahnabschnitt 6b relativ durch die Eingriffelemente 12a, 12b und die Unterbrüche 20 bzw. die Verbindungselemente 26 bestimmt wird. Die Unterbrüche 20 sind breiter als die Verbindungselemente 26 ausgestaltet, so dass die Verbindungselemente und die Eingriffelemente 12a, 12b unterhalb einer von der Förderbahn 6 aufgespannten Förderebene abgesenkt werden können.

Das System 2 umfasst eine Sensoreinheit 24, beispielsweise umfassend eine Kamera und/oder eine Lichtschranke, die ausgestaltet ist, eine An- bzw. Abwesenheit von einem und/oder mehreren Ladungsträgern 4 an unterschiedlichen Positionen in dem System 2, insbesondere in der Anhaltposition 16, und/oder eine Bewegung der Ladungsträger 4 zu detektieren. Das System 2 umfasst zudem eine Steuerung 14, die mit der Förderbahn 6, insbesondere dem mittleren Förderbahnabschnitt 6b, der Sensoreinheit 24, und der Hubvorrichtung 10 verbunden ist.

Ohne einen oder mehrere Ladungsträger 4 an der Anhaltposition 16 befinden sich die Eingriffelemente 12a, 12b in einer Ruheposition mit einem horizontalen Abstand dₘₐₓ zueinander. Sobald ein Ladungsträger 4 an die vorbestimmte Anhaltposition 16 gefördert wird, wird das zweite Eingriffelement 12b horizontal hin zum ersten Eingriffelement 12a bewegt bis ein horizontaler Abstand dₘᵢₙ erzielt ist, welcher hier geringer ist als eine seitliche Ausdehnung des Ladungsträgers 4 quer zur Förderrichtung 8. Der horizontale Abstand d wird hier orthogonal zur Förderrichtung 8 verändert. Die Eingriffelemente 12a, 12b sind nun mit dem Ladungsträger 4 in Eingriff gebracht. Zum Durchführen der vertikalen Bewegung umfasst die Hubvorrichtung 10 hier nicht dargestellten Antrieb.

Zum vertikalen Bewegen der Eingriffelemente 12a, 12b umfasst die Hubvorrichtung 10 einen zeichnerisch nicht dargestellten Hubantrieb, der als Motor an dem Mast 22 über einen Riemen angetrieben wird. Nachdem die Eingriffelemente 12a, 12b in Eingriff mit dem Ladungsträger 4 gebracht worden sind, werden die Eingriffelemente 12a, 12b vertikal bewegt und so der in Eingriff gebrachte Ladungsträger 4 angehoben.

Figur 1b zeigt eine Variation der Figur 1a, wobei die zwei Eingriffelemente 12 hier orthogonal zur Förderrichtung 8 angeordnet sind. Die orthogonal zur Förderrichtung 8 angeordneten Eingriffelemente 12 und das nur eine Verbindungselement 26, welches vertikal beweglich an dem Mast 22 der Hubvorrichtung 10 befestigt ist, bilden einen U-förmigen Greifer aus. In der Ruheposition sind die Eingriffelemente 12 mit einem Abstand dₘₐₓ zueinander angeordnet, der größer ist als die Ausdehnung eines Ladungsträgers 4, so dass die Eingriffelemente 12 hindernisfrei vertikal um einen in der Anhaltposition befindlichen Ladungsträger 4 bewegt werden können. Die Unterbrüche 20 erlauben ein Passieren der Eingriffelemente 12 unterhalb der Förderebene und sind somit notwendigerweise breiter als die Eingriffelemente 12 ausgestaltet. Die Eingriffelemente 12 können von einem Antrieb horizontal und in bzw. entgegen der Förderrichtung 8 bewegt werden. Um die Eingriffelemente 12 mit einem in der Anhaltposition 16 befindlichen Ladungsträger 4 in Eingriff zu bringen, werden die Eingriffelemente 12 direkt unterhalb von dem betreffenden Ladungsträger 4 positioniert und im Anschluss werden die Eingriffelemente 12 durch horizontale Bewegung einander angenähert und so der horizontale Abstand dₘᵢₙ eingestellt.

Nachdem der Ladungsträger 4 mit den Eingriffelementen 12 in Eingriff gebracht worden ist, kann er durch Ansteuerung des Hubantriebs durch die Steuerung 14 angehoben werden.

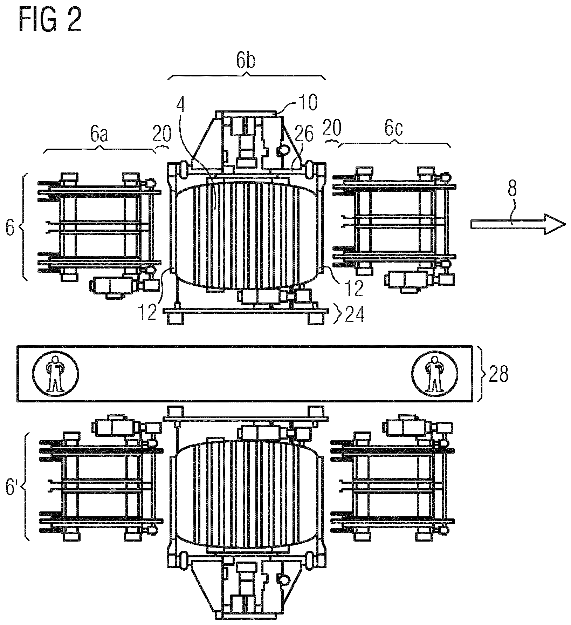

Figur 2 zeigt gemäß einer weiteren Ausführungsform das System 2 mit zwei parallel zueinander angeordneten Förderbahnen 6, 6' und spiegelbildlich zueinander angeordneten Hubvorrichtungen 10, 10'. Zwischen den Förderbahnen 6, 6' befindet sich ein für Menschen dimensionierter Zugang 28, aus Sicherheitsgründen weist dieser eine Mindestbreite von etwa 90 cm auf. Die seitliche Anordnung der Hubvorrichtungen 10, 10' ermöglicht, dass sich die beweglichen Komponenten der Hubvorrichtungen 10, 10' außerhalb der Gefahrenzone für den Menschen befinden. Da eine Behebung von Störungen häufig die Anwesenheit eines Menschen erfordert, muss für die Behebung einer Störung auf der ersten Förderbahn 6 die zweite Förderbahn 6' nicht angehalten werden.

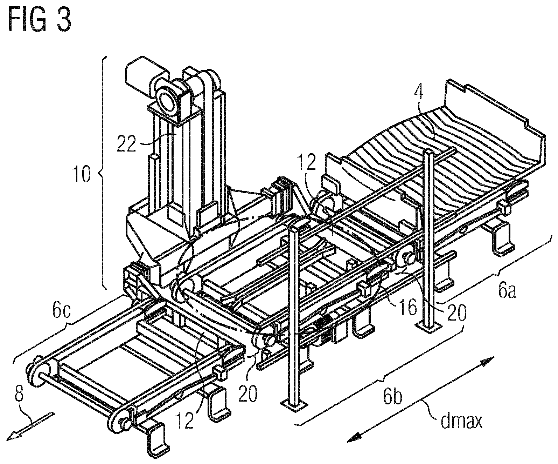

Figur 3 zeigt gemäß noch einer weiteren Ausführungsform der Erfindung das System 2 von Figur 2 mit einem vor einem Unterbruch 20 positionierten Ladungsträger 4. Die Eingriffelemente 12 sind in Ruheposition unterhalb der Förderbahn 6 angeordnet.

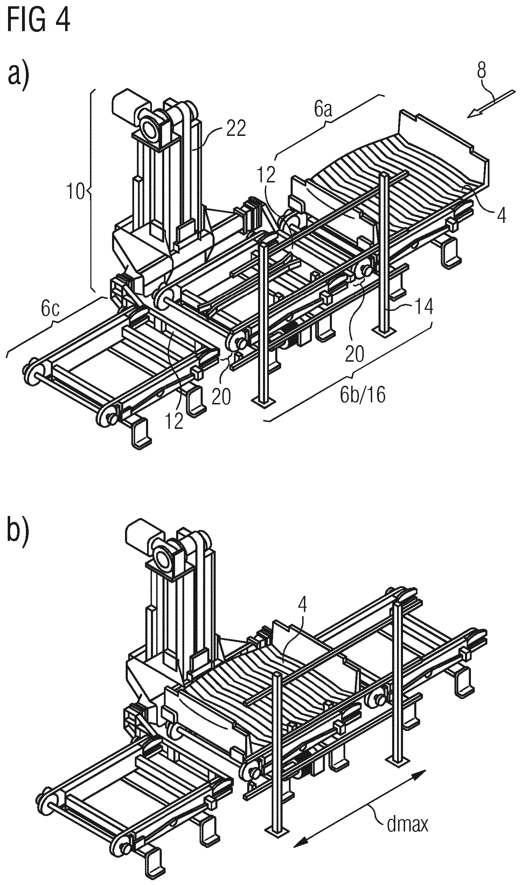

Die Figuren 4a - 4k zeigen schrittweise die Bildung eines Stapels 18 aus Ladungsträgern 4 an der Anhaltposition 16 eines erfindungsgemäßen Systems 2 unter Verwendung einer Hubvorrichtung 10. Das System 2 ist analog ausgestaltet zu dem in Figur 3 dargestellten System 2. Die Förderbahn 6 ist abschnittsweise segmentiert und umfasst drei Förderbahnsegmente bzw. Förderbahnabschnitte 6a, 6b, 6c, wobei zwischen den Förderbahnabschnitten 6a, 6b bzw. 6a, 6c ein Spalt bzw. Unterbruch 20 ist, der breit genug ist, um die Eingriffelemente 12 unter die Förderbahn 6 abzusenken. Die Hubvorrichtung 10 ist vorgesehen zum Stapeln und Entstapeln von Ladungsträgern 4, insbesondere von leeren Flughafen-Transportbehältern. Für das Stapeln werden die unmittelbar auf der Förderbahn 6 aufliegenden Ladungsträger 4 einzeln in die einen Stapelaufbauposition darstellende Anhaltposition 16 auf dem mittleren Förderbahnabschnitt 6a transportiert, mit den Eingriffelementen 12 in Eingriff gebracht und anschließend werden die Eingriffelemente 12 samt dem zu Beginn unmittelbar auf der Förderbahn 6 aufliegenden Ladungsträger 4 von der Hubvorrichtung 10 soweit angehoben bzw. vertikal bewegt, dass ein nachfolgender Ladungsträger 4 entlang der Förderrichtung 8 in die Anhaltposition transportiert werden kann.

Figur 4a zeigt die Eingriffelemente 12 in Ruheposition oder offenem Zustand unterhalb der von der Förderbahn 6 aufgespannten Förderebene. In der Ruheposition ist der Abstand dₘₐₓ der Eingriffelemente größer als eine Länge eines Ladungsträgers 4. Der Abstand dₘₐₓ der Eingriffelemente 12 in der Ruheposition bestimmt den Abstand der zwei Unterbrüche 20. Bei konstantem Abstand dₘₐₓ und freien Unterbrüchen können die Eingriffelemente 12 von der Hubvorrichtung 10 ungestört und ohne anhalten vertikal bewegt, also angehoben und abgesenkt werden. Als Förderbahnabschnitte 6a-6c können einfache Linearförderer, beispielsweise Transportbänder verwendet werden, entscheidend ist die Anordnung derart, dass ein Spalt gebildet wird. Von dem ersten Förderbahnabschnitt 6a wird der Ladungsträger 4 entlang der Förderrichtung 8 hin zur Anhaltposition 16 auf dem mittleren Förderbahnabschnitt 6b befördert.

Figur 4b zeigt den Ladungsträger 4 in der Anhaltposition 16 auf dem mittleren Förderbahnabschnitt 6b, der angehalten wurde. Die Sensoreinheit 24 überprüft mit Hilfe von Lichtschranken die korrekte Positionierung des Ladungsträgers 4 mittig auf dem mittleren Förderbahnabschnitt 6b aufliegend. Die Eingriffelemente 12 befinden sich weiterhin in Ruheposition mit einem unveränderten horizontalen Abstand dₘₐₓ zueinander. Die beiden Eingriffelemente 12 werden nun mit konstantem horizontalen Abstand dₘₐₓ von der Hubvorrichtung 10 angehoben, solange bis sich die Eingriffelemente 12 vertikal gesehen in einer Eingriffposition unmittelbar unterhalb des in Eingriff zu bringenden Ladungsträgers 4 befinden.

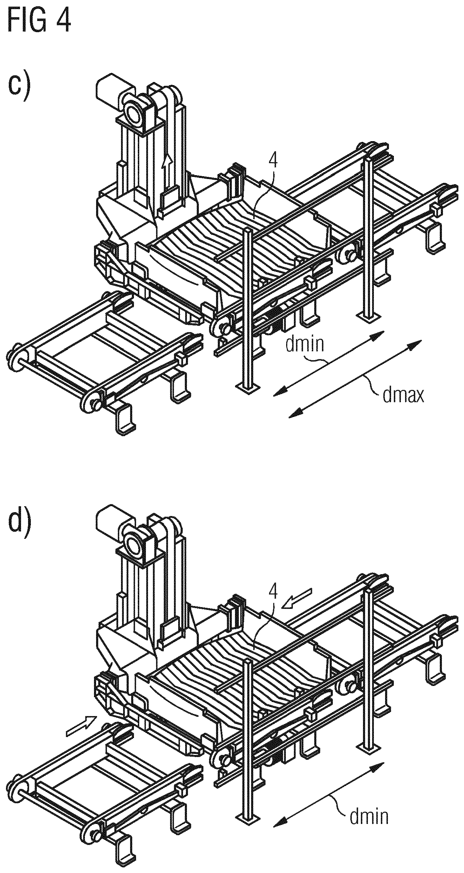

Figur 4c zeigt die angehobenen Eingriffelemente 12 mit unverändertem horizontalen Abstand dₘₐₓ zueinander. Anschließend wird der horizontale Abstand d der Eingriffelemente 12 zueinander verringert, um die Eingriffelemente 12 mit dem Ladungsträger 4 in Eingriff zu bringen.

Figur 4d zeigt die vertikale Eingriffposition der Eingriffelemente 12, die bereits in Figur 4c bestand. Der Abstand d der Eingriffelemente 12 wurde verringert auf den verringertem Abstand dₘᵢₙ, der kleiner als die Länge l des Ladungsträgers 4 ist. Der Ladungsträger 4 befindet sich nun also auch in einer horizontalen Eingriffposition und ist in Eingriff mit den Eingriffelementen 12 und wird so von diesen eingespannt bzw. eingeklemmt, noch liegt der Ladungsträger 4 aber unmittelbar auf der Förderbahn 6 bzw. dem mittleren Förderbahnabschnitt 6b auf. Anschließend werden die Eingriffelemente 12 samt in Eingriff gebrachtem Ladungsträger 4 von der Hubvorrichtung 10 angehoben.

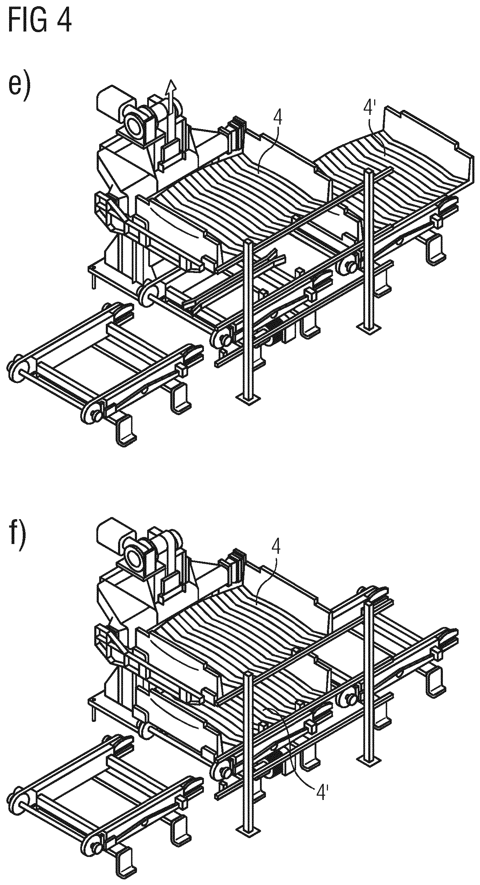

Figur 4e zeigt den ersten, von der Hubvorrichtung 10 über die Eingriffelemente 12 angehobenen Ladungsträger 4, der soweit angehoben wird, dass an der Anhaltposition 16 Platz geschaffen wurde für einen weiteren, nachfolgenden Ladungsträger 4'**.**

Figur 4f zeigt den entlang der Förderrichtung 8 transportierten, nachfolgenden Ladungsträger 4' an der Anhaltposition 16 und wurde so unterhalb den ersten Ladungsträger 4 geschoben. Der erste Ladungsträger 4 befindet sich weiterhin in Eingriff mit den Eingriffelementen. Die Hubvorrichtung 10 wird die Eingriffelemente 12 und somit den ersten Ladungsträger 4 im Folgenden absenken.

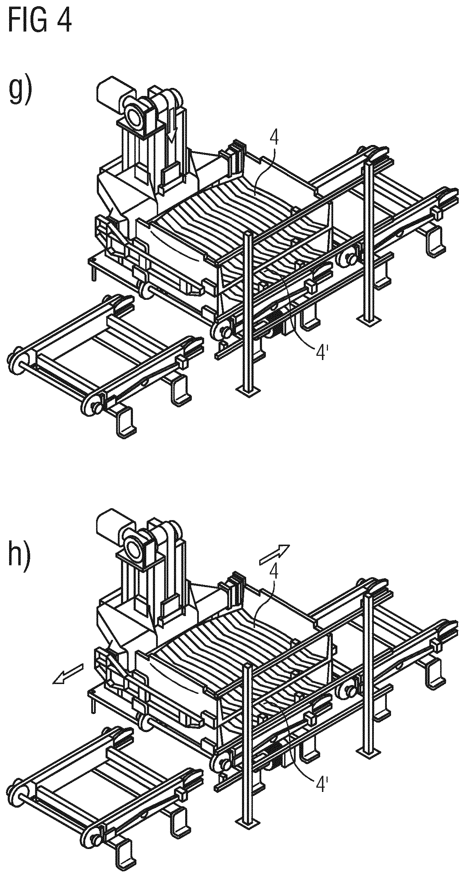

Figur 4g zeigt das Bilden eines Stapels der zwei Ladungsträger 4, 4'. Die Hebevorrichtung 10 wird die Eingriffelemente 12 und somit den ersten Ladungsträger 4 um etwa 2-3 mm absenken, ehe der eingeklemmte Ladungsträger 4 vollständig auf dem weiteren, unmittelbar auf der Förderbahn 6 aufliegenden Ladungsträger 4' abgesetzt wird. Der vertikale Abstand dₘᵢₙ der Eingriffelemente 12 ist weiterhin unverändert.

Figur 4h zeigt eine Wiederverbreiterung der Eingriffelemente 12 hin zum Abstand dₘₐₓ. Der Eingriff zwischen den Eingriffelementen 12 und dem erstem Ladungsträger 4 wird so gelöst.

Der erste Ladungsträger 4 wird so auf den nachfolgenden Ladungsträger 4' gestapelt.

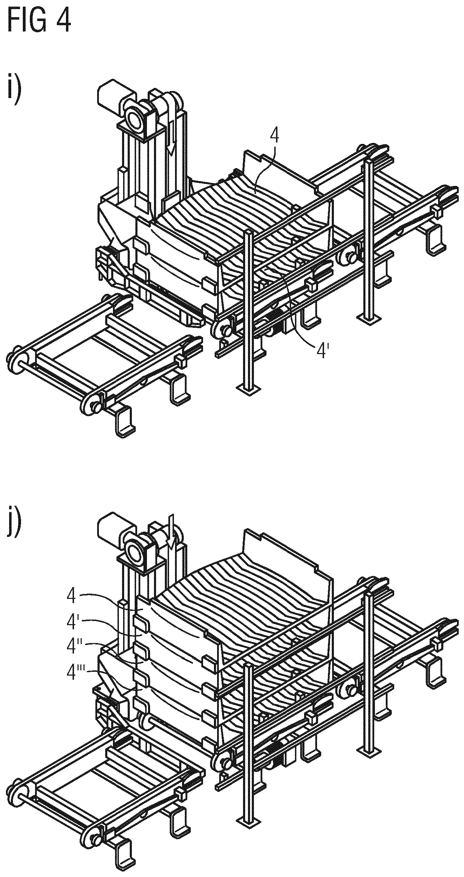

Figur 4i zeigt ein Absenken der Eingriffelemente 12, so lange bis die Eingriffelemente 12 in einer vertikalen Eingriffposition unmittelbar unterhalb des nachfolgenden Ladungsträgers 4' angeordnet sind. Das Einstapeln mit noch einem weiteren Ladungsträger 4" wird nun analog zu dem oben beschriebenen Verfahren weiter durchgeführt mit dem einzigen Unterschied, dass die Eingriffelemente 12 die Last von zwei Ladungsträgern 4, 4' halten. In Eingriff mit den Eingriffelementen 12 wird der zunächst zuunterst liegende weitere Ladungsträger 4'.

Figur 4j zeigt das Ergebnis des sequentiellen Einstapelns von drei Ladungsträgern 4, 4', 4", Im Anschluss an die gezeigte Situation wird noch ein Ladungsträger 4‴ von unten eingestapelt.

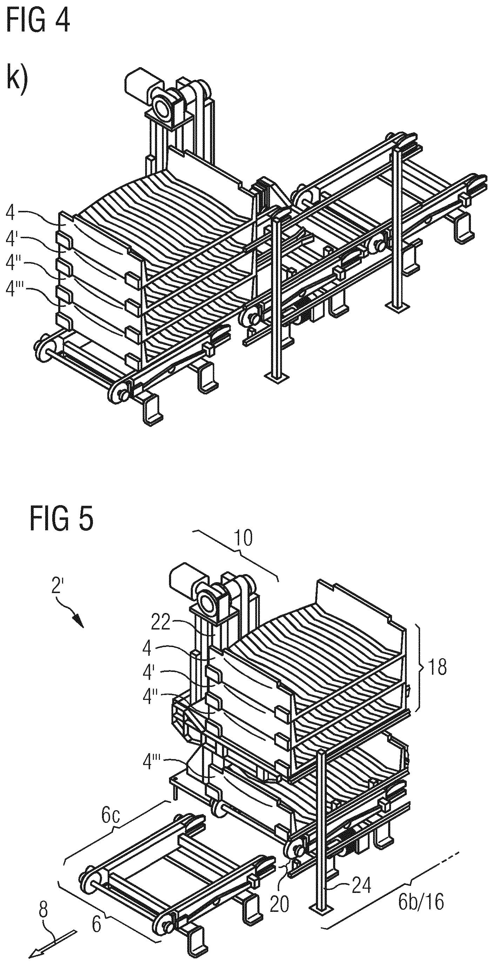

Figur 4k zeigt, wie ein Stapel von vier Ladungsträgern 4, 4', 4", 4‴ von dem mittleren Förderbahnabschnitt 6b und dem dritten Förderbahnabschnitt 6c weiter entlang der Förderrichtung 8 transportiert wurde.

Figur 5 zeigt gemäß noch einer weiteren Ausführungsform der Erfindung eine Momentaufnahme eines Entstapelns eines Stapels 18 von vier Ladungsträgern 4, 4', 4", 4‴. Das Entstapeln wird durchgeführt, indem die in Figur 4 detailliert beschriebenen Verfahrensschritte des Stapelns in umgekehrter Reihenfolge durchgeführt werden. Beim Entstapeln wird der unterste Ladungsträger 4‴ von dem übrigen Stapel 18, umfassend die drei Ladungsträger 4, 4', 4", separiert, wobei der unterste Ladungsträger 4‴ des übrigen Stapels 18 mit den Eingriffelementen 12 in Eingriff gebracht und von diesen gehaltenen wird. Die drei obersten Ladungsträger 4, 4', 4" werden angehoben, indem der zweitunterste Ladungsträger 4" in Eingriff mit den Eingriffelementen 12 gebracht wird. Während beim Bilden eines Stapels 18 stets nur ein einzelner Ladungsträger 4 von unten eingestapelt werden kann, ist es beim Entstapeln prinzipiell möglich, zwei Ladungsträger 4‴, 4" oder auch noch mehr Ladungsträger 4 zugleich als verkleinerten Stapel 18 entlang der Förderrichtung 8 zu transportieren. Voraussetzung hierfür ist jedoch, dass die Hubvorrichtung 10 für ein genügend hohes Anheben der Eingriffelemente 12 ausgestaltet ist.

Gemäß einer weiteren Ausführungsform sind die Ladungsträger 4 zueinander formschlüssig ausgestaltet, so dass aus ihnen gebildete Stapel 18 stabil genug sind, um entlang der Förderbahn 6 ohne weitere Absicherung gefördert zu werden. Gemäß einer Ausführungsform kann ein System 2 zwei oder mehr Hubvorrichtungen 10a, 10b umfassen, wobei die eine Hubvorrichtung 10a zum Stapeln und die andere Hubvorrichtung 10b zum Entstapeln ausgebildet sein kann. Diese Zuweisung kann sinnvoll bei stets ähnlicher, asymmetrisch positionierten Bedarf von leeren Ladungsträgern 4 an einer Position und Entleerung der Ladungsträger 4 an einer weiteren Position. Die Aufgabe des Stapelns bzw. Entstapelns kann jedoch auch dynamisch zugewiesen werden und somit austauschbar sein. Eine Hubvorrichtung 10 ist also zum Stapeln und/oder Entstapeln verwendbar.

Die Ladungsträger 4 sind auf das System 2 abgestimmt. Die Dimensionierung und Formgestaltung der Eingriffelemente 12, die Breite der Unterbrüche 20 und ihr Abstand zueinander, aber auch die Auslegung der Belastbarkeit der Hubvorrichtung 10 bzw. die Stabilität und zulässige Tragkraft der Eingriffelemente 12 wird auf die verwendeten Ladungsträger 4 und die zu erzielende Stapelhöhe abgestimmt. Eine Verwendung anderer Ladungsträger 4 erfordert eine Anpassung der Eingriffelemente 12 und/oder der Hubvorrichtung 10. Die Sensoreinheit 24 ist nicht nur für ein Feststellen einer korrekten Positionierung der Ladungsträger 4 ausgestaltet, sondern auch für ein Feststellen von Störsituationen, beispielsweise fehlerhaft positionierter /oder fehlerhaft ausgerichteter und/oder fehlerhaft gestapelter Ladungsträger 14 ausgebildet.

Gemäß einer Ausführungsform ist die Sensoreinheit 24 ausgestaltet, Position und/oder Bewegung der Ladungsträger 4 auf dem gesamten System 2 zu erfassen. Die Steuerung 14 ist über Aufkommen und Bedarf an Ladungsträgern 4 an sämtlichen Positionen des gesamten Systems informiert, so dass die Ansteuerung der Förderbahn 6 und/oder der Hubvorrichtung 10 und der Eingriffelemente 12 und somit das Stapeln bzw. Entstapeln in Abhängigkeit von Aufkommen und Bedarf an Ladungsträgern 4 besonders energieeffizient (wenig unnötige Stapelvorgänge, möglichst wenig unnötiger Transport nicht benötigter Ladungsträger 4) und platzeffizient (Stapel erfordern weniger Platz als einzelne Ladungsträger 4) gesteuert wird.

Gemäß einer Ausführungsform kann eine Hubvorrichtung 10, die zum Ausbilden von vier Ladungsträgern 4 umfassenden Stapeln 18, ausgestaltet ist, einen Spitzendurchsatz von 1200 Ladungsträgern pro Stunde erzielen. Die von den Figuren 4a - 4k dargestellten Verfahrensschritte können innerhalb von Sekunden, teilweise sogar innerhalb von Zehntelsekunden, durchgeführt werden.

Erfindungsgemäß umfasst das System 2 eine Förderbahn 6, eine Hubvorrichtung 10 umfassend einen mindestens auf einer Seite der Förderbahn fest montierten Mast 22, beispielsweise durch Verankerung auf dem Boden, einen Hubantrieb und Eingriffelemente 12, welche direkt über ein Verbindungselement 26 an dem Mast 22 vertikal beweglich montiert sind, wobei eine vertikale Bewegung durch einen von der Hubvorrichtung 10 umfassten Hubantrieb angetrieben wird. Das System 2 umfasst zudem einen Antrieb, um den horizontalen Abstand der Eingriffelemente 12 zueinander zu verändern. Das System 2 umfasst zudem elektrische Komponenten.

Erfindungsgemäß umfasst das System 2 zwei ansteuerbare Antriebe. Der erste Antrieb ist ein Hubantrieb, der ausgestaltet ist, eine vertikale Bewegung der Eingriffelemente zu erzielen. Der zweite Antrieb ist ausgestaltet, eine horizontale Bewegung der Eingriffelemente 12 zu erzielen. Die Steuerung 14 ist adaptiert, den Antrieb und den Hubantrieb aufeinander abgestimmt anzutreiben. Das Stapeln und Entstapeln von Ladungsträgern 4 erfordert keine gleichzeitige, sondern nur eine sequentielle Durchführung von vertikaler und horizontaler Bewegung. Die Steuerung 14 ist adaptiert, den Antrieb und den Hubantrieb synchronisiert in Abhängigkeit von den Ladungsträgern 4 im System 2 anzusteuern, wobei die synchronisierte Ansteuerung hier eine sequentielle und keine gleichzeitige Ansteuerung gemeint ist. Eine sequentielle Ansteuerung zweier Antriebe ist einfacher durchführbar als eine gleichzeitige Ansteuerung. Da nur zwei Antriebe benötigt werden, ist das System 2 besonders verschleiß- und wartungsarm. Gemäß einer weiteren Ausführungsform ist die Steuerung 14 als Schaltschrank ausgebildet. Der Schaltschrank umfasst Frequenzumwandler für die Versorgung der Antriebe mit der notwendigen Frequenz und mindestens ein Logikmodul für die lokale Ansteuerung. Die Steuerung 14 steuert den Antrieb für die horizontale Bewegung der Eingriffelemente 12, den Hubantrieb für die vertikale Bewegung der Hubvorrichtung 10 bzw. daraus resultierend der Eingriffelemente 12. Die Steuerung 14 erfasst die von der Sensoreinheit 24 erfassten Informationen und steuert in Abhängigkeit hiervon unter Einbeziehen weiterer Informationen die Förderbahn 6 und/oder den Hubantrieb und/oder den Antrieb an.

### Bezugszeichenliste

- 2: System
- 4: Ladungsträger
- 6: Förderbahn
- 8: Förderrichtung
- 10: Hubvorrichtung
- 12: Eingriffelemente
- 14: Steuerung
- 16: Anhaltposition
- 18: Stapel
- 20: Unterbruch der Förderbahn 6
- 22: Mast der Hubvorrichtung 10
- 24: Sensoreinheit
- 26: Verbindungselement
- 28: Zugang
- d: Abstand der Eingriffelemente
- l: Länge eines Ladungsträgers

## Patentansprüche

1. System (2) zum Stapeln und/oder Entstapeln von Ladungsträgern (4), beispielsweise Transportbehältern, umfassend
a) eine Förderbahn (6), auf der die Ladungsträger (4) einzeln sowie gestapelt entlang einer Förderrichtung (8) förderbar sind;
b) eine seitlich der Förderbahn (6) angeordnete Hubvorrichtung (10) für die Ladungsträger (4), wobei die Hubvorrichtung (10) zwei Eingriffelemente (12) umfasst, die mit den Ladungsträgern (4) in Eingriff bringbar sind; und
c) eine Steuerung (14), die adaptiert ist, die Förderbahn (6) und die Hubvorrichtung (10) so anzusteuern, dass die Ladungsträger (4) an einer Anhaltposition (16) relativ zur Hubvorrichtung (10) angehalten werden und die Eingriffelemente (12) in Eingriff gebracht werden wahlweise mit einem unmittelbar auf der Förderbahn (6) aufliegenden angehaltenen Ladungsträger (4) oder einem nicht unmittelbar auf der Förderbahn (6) aufliegenden Ladungsträger (4) eines Stapels (18) von Ladungsträgern (4); wobei
- die Hubvorrichtung (10) ein die Eingriffelemente (12) verbindendes Verbindungselement (26) umfasst, wobei die zwei Eingriffelemente (12) orthogonal zur Förderrichtung (8) angeordnet sind, und die Eingriffelemente (12) und das Verbindungselement (26) einen U-förmigen Greifer ausbilden;
- die Förderbahn (6) zwei Unterbrüche (20) zum Passieren der Eingriffelemente (12) aufweist, wobei die Unterbrüche (20) jeweils groß genug dimensioniert sind, um die Eingriffelemente 12 aufzunehmen und unter die Förderbahn (6) abzusenken;
- die Hubvorrichtung (10) einen Mast (22) umfasst, an welchem die Eingriffelemente (12) über das Verbindungselement (26) vertikal beweglich montiert sind und das System (2) einen ansteuerbaren Hubantrieb aufweist, der ausgestaltet ist, die Höhe der Eingriffelemente (12) zu verändern, wobei die Konstruktion eine vertikale Bewegung der Eingriffelemente (12) erlaubt;
- ein horizontaler Abstand der Eingriffelemente (12) zueinander veränderbar ist, um die Eingriffelemente (12) mit einem Ladungsträger (4) in Eingriff zu bringen, wobei die Eingriffelemente eine Ruheposition und eine Eingriffposition aufweisen, wobei die Eingriffelemente (12) in der Eingriffposition näher aneinander positioniert sind als in der Ruheposition, wobei die Eingriffelemente in der Ruheposition mit einem Abstand zueinander angeordnet sind, der größer ist als die Ausdehnung eines Ladungsträgers, so dass die Eingriffelemente (12) hindernisfrei vertikal um einen in der Anhaltposition befindlichen Ladungsträger (4) bewegt werden können;
- das System (2) einen ansteuerbaren Antrieb aufweist, der ausgestaltet ist, den horizontalen Abstand der Eingriffelemente (12) zueinander zu verändern;
- die Eingriffelemente (12) derart unterhalb der auf Förderbahn (6) aufliegenden Ladungsträger (4) positionierbar sind, dass die Ladungsträger ungestört von den Eingriffelementen entlang der Förderbahn förderbar sind.

2. System (2) nach einem der vorangehenden Ansprüche, **dadurch gekennzeichnet, dass**
die Eingriffelemente (12) auf Höhe und/oder unterhalb und/oder oberhalb der auf der Förderbahn (6) aufliegenden Ladungsträger (4) positionierbar sind.

3. System (2) nach einem der vorangehenden Ansprüche, zudem umfassend eine Sensoreinheit (24), die ausgestaltet ist, die Ladungsträger (4) auf dem System (2) zu erfassen.

4. System (2) nach einem der vorangehenden Ansprüche, **dadurch gekennzeichnet, dass**
die Steuerung (14) adaptiert ist, den Antrieb und den Hubantrieb synchronisiert in Abhängigkeit von den Ladungsträgern (4) im System (2) anzusteuern.

5. Verfahren zum Stapeln und/oder Entstapeln von Ladungsträgern (4), beispielsweise Transportbehältern, mit einem System (2) nach einem der Ansprüche 1-4, umfassend die Verfahrensschritte:
a) ein unmittelbar auf einer Förderbahn (6) aufliegender Ladungsträger (4) wird einzeln oder gestapelt entlang einer Förderrichtung (8) der Förderbahn (6) gefördert;
b) die Förderbahn (6) wird angehalten, wenn sich der unmittelbar auf der Förderbahn (6) aufliegende Ladungsträger (4) an einer Anhaltposition (16) befindet;
c) die Eingriffelemente (12) werden in Eingriff gebracht wahlweise mit dem unmittelbar auf der Förderbahn (6) aufliegenden Ladungsträger (4) oder einem nicht unmittelbar auf der Förderbahn (6) aufliegenden Ladungsträger (4) eines Stapels (18) von Ladungsträgern (4);
d) die Hubvorrichtung (10) bewegt den mit den Eingriffelementen (12) in Eingriff gebrachten Ladungsträger (4) vertikal;
e) die Hubvorrichtung (10) stoppt die vertikale Bewegung des mit den Eingriffelementen (12) in Eingriff gebrachten Ladungsträgers (4);
f) die Eingriffelemente (12) lösen den Eingriff mit dem Ladungsträger (4).

6. Verfahren nach Anspruch 5,
**dadurch gekennzeichnet, dass**
die Eingriffelemente unterhalb der auf der Förderbahn (6) aufliegenden Ladungsträger (4) positioniert sind, bevor die Eingriffelemente mit dem Ladungsträger (4) in Eingriff gebracht werden.

7. Verfahren nach einem der Ansprüche 5 bis 6 zudem umfassend den Verfahrensschritt
ein weiterer Ladungsträger (4) von der Förderbahn (6) wird befördert, während der mit den Eingriffelementen (12) in Eingriff gebrachte Ladungsträger (4) von den Eingriffelementen (12) gehalten wird.

## Claims

1. System (2) for stacking and/or unstacking load carriers (4), for instance transport carriers comprising
a) a conveyor track (6) on which the load carriers (4) can be conveyed individually and stacked along a conveying direction (8) ;
b) a lifting apparatus (10) arranged laterally with respect to the conveyor track (6) for the load carrier (4), wherein the lifting apparatus (10) comprises two engaging elements (12) which can mesh with the load carriers (4); and
c) a controller (14) which is adapted to control the conveyor track (6) and the lifting apparatus (10) in such a way that the load carriers (4) are held on a stop position (16) relative to the lifting apparatus (10) and the engaging elements (12) are meshed optionally with a load carrier (4) retained so as to rest directly on the conveyor track (6) or a load carrier (4) of a stack (18) of load carriers (4) not resting directly on the conveyor track (6); wherein
- the lifting apparatus (10) comprises a connecting element (26) which connects the engaging elements (12), wherein the two engaging elements (12) are arranged orthogonally to the conveying direction (8), and the engaging elements (12) and the connecting element (26) form a U-shaped gripper;
- the conveyor track (6) has two interruptions (20) to allow the engaging elements (12) to pass, wherein the interruptions (20) are each dimensioned to be sufficiently large to receive the engaging elements 12 and to lower the same below the conveyor track (6);
- the lifting apparatus (10) comprises a mast (22), on which the engaging elements (12) are mounted so as to be vertically movable by way of the connecting element (26) and the system (2) has a controllable lifting drive which is designed to change the height of the engaging elements (12), wherein the construction permits a vertical movement of the engaging elements (12);
- a horizontal distance of the engaging elements (12) with respect to one another can be changed in order to mesh the engaging elements (12) with a load carrier (4), wherein the engaging elements have a rest position and an engaged position, wherein the engaging elements (12) are positioned closer to one another in the engaged position than in the rest position,
wherein the engaging elements are arranged at a distance from one another in the rest position which is greater than the extent of a load carrier so that the engaging elements (12) can be moved vertically about a load carrier (4) located in the stop position in a manner free of obstacles;
- the system (2) has a controllable drive, which is designed to change the horizontal distance of the engaging elements (12) from one another;
- the engaging elements (12) can be positioned below the load carrier (4) which rests on the conveyor track (6) so that the load carrier can be conveyed along the conveyor track in a manner undisturbed by the engaging elements.

2. System (2) according to one of the preceding claims, **characterised in that** the engaging elements (12) can be positioned at the height and/or below and/or above the charge carrier (4) resting on the conveyor track (6).

3. System (2) according to one of the preceding claims, moreover comprising a sensor unit (24) which is designed to detect the charge carrier (4) on the system (2).

4. System (2) according to one of the preceding claims, **characterised in that** the controller (14) is adapted to control the drive and the lifting drive in synchrony as a function of the load carriers (4) in the system (2).

5. Method for stacking and/or unstacking load carriers (4), for instance transport containers, with a system (2) according to one of claims 1 - 4, comprising the method steps:
a) a load carrier (4) resting directly on a conveyor track (6) is conveyed individually or in a stacked manner along a conveying direction (8) of the conveyor track (6);
b) the conveyor track (6) is retained if the load carrier (4) resting directly on the conveyor track (6) is located on a stop position (16);
c) the engaging elements (12) are meshed optionally with the load carrier (4) resting directly on the conveyor track (6) or a load carrier (4) of a stack (18) of load carriers not resting directly on the conveyor track (6);
d) the lifting apparatus (10) moves the load carrier (4) meshed with the engaging elements (12) vertically;
d) the lifting apparatus (10) stops the vertical movement of the load carrier (4) meshed with the engaging elements (12);
f) the engaging elements (12) release the meshing with the load carrier (4).

6. Method according to claim 5, **characterised in that** the engaging elements are positioned below the load carrier (4) resting on the conveyor track (6) before the engaging elements are meshed with the load carrier (4).

7. Method according to one of claims 5 to 6, moreover comprising the method step
a further load carrier (4) of the conveyor track (6) is conveyed while the load carrier (4) meshed with the engaging elements (12) is held by the engaging elements (12).

## Revendications

1. Système (2) pour empiler et/ou désempiler des plateaux de chargement (4), par exemple des conteneurs de transport, comprenant
a) un tapis roulant (6) sur lequel les plateaux de chargement (4) peuvent être convoyés seuls ou empilés le long d'une direction de convoyage (8) ;
b) un dispositif de levage (10) disposé latéralement par rapport au tapis roulant (6) pour les plateaux de chargement (4), le dispositif de levage (10) comprenant deux éléments de mise en contact (12) qui peuvent être mis en contact avec les plateaux de chargement (4) ; et
c) une commande (14) adaptée pour commander le tapis roulant (6) et le dispositif de levage (10) de façon à ce que les plateaux de chargement (4) soient arrêtés à une position d'arrêt (16) par rapport au dispositif de levage (10) et que les éléments de mise en contact (12) soient mis en contact au choix avec un plateau de chargement (4) posé directement sur le tapis roulant (6) ou avec un plateau de chargement (4) posé non directement sur le tapis roulant (6) parmi une pile (18) de plateaux de chargements (4) ; dans lequel
- le dispositif de levage (10) comprend un élément de liaison (26) qui relie les éléments de mise en contact (12), les deux éléments de mise en contact (12) étant disposés orthogonalement par rapport à la direction de convoyage (8), et les éléments de mise en contact (12) et l'élément de liaison (26) formant une pince en forme de U ;
- le tapis roulant (6) présente deux interruptions (20) pour faire passer les éléments de mise en contact (12), les interruptions (20) étant dimensionnées respectivement assez grandes pour accueillir les éléments de mise en contact (12) et les faire descendre sous le tapis roulant (6) ;
- le dispositif de levage (10) comprend un poteau (22) sur lequel sont montés mobiles verticalement les éléments de mise en contact (12) au-dessus de l'élément de liaison (26), et le système (2) présente un entraînement de levage commandable qui est conçu pour modifier la hauteur des éléments de mise en contact (12), la conception permettant un mouvement vertical des éléments de mise en contact (12) ;
- un intervalle horizontal entre les éléments de mise en contact (12) est modifiable pour mettre en contact les éléments de mise en contact (12) avec un plateau de chargement (4), les éléments de mise en contact présentant une position au repos et une position de contact, les éléments de mise en contact (12) étant positionnés en position de contact plus proches l'un de l'autre qu'en position au repos,
dans lequel les éléments de mise en contact en position au repos sont disposés à un intervalle plus grand que la dimension d'un plateau de chargement, de sorte que les éléments de mise en contact (12) peuvent être mis en mouvement verticalement sans obstacle autour d'un plateau de chargement (4) en position d'arrêt ;
- le système (2) présente un entraînement commandable conçu pour modifier l'intervalle horizontal entre les éléments de mise en contact (12) ;
- les éléments de mise en contact (12) sont positionnables sous le plateau de chargement (4) posé sur le tapis roulant (6) de sorte que le plateau de chargement puisse être convoyé sans perturbations par les éléments de mise en contact le long du tapis roulant.

2. Système (2) selon l'une des revendications précédentes,
**caractérisé en ce que**
les éléments de mise en contact (12) sont positionnables à hauteur et/ou au-dessous et/ou au-dessus des plateaux de chargement (4) posés sur le tapis roulant (6).

3. Système (2) selon l'une des revendications précédentes, comprenant en plus une unité de capteur (24) conçue pour détecter les plateaux de chargement (4) sur le système (2).

4. Système (2) selon l'une des revendications précédentes,
**caractérisé en ce que**
la commande (14) est adaptée pour commander l'entraînement et l'entraînement de levage de façon synchronisée en fonction des plateaux de chargement (4) dans le système (2).

5. Procédé pour empiler et/ou désempiler des plateaux de chargement (4), par exemple des conteneurs de transport, avec un système (2) selon l'une des revendications 1 à 4, comprenant les étapes de procédé consistant en ce que :
a) un plateau de chargement (4) posé directement sur un tapis roulant (6) est convoyé seul ou empilé le long d'une direction de convoyage (8) du tapis roulant (6) ;
b) le tapis roulant (6) est arrêté quand le plateau de chargement (4) posé directement sur le tapis roulant (6) se trouve à une position d'arrêt (16) ;
c) les éléments de mise en contact (12) sont mis en contact au choix avec le plateau de chargement (4) posé directement sur le tapis roulant (6) ou avec un plateau de chargement (4) posé non directement sur le tapis roulant (6) parmi une pile (18) de plateaux de chargements (4) ;
d) le dispositif de levage (10) déplace verticalement le plateau de chargement (4) mis en contact avec les éléments de mise en contact (12) ;
e) le dispositif de levage (10) arrête le déplacement vertical du plateau de chargement (4) mis en contact avec les éléments de mise en contact (12) ;
f) les éléments de mise en contact (12) relâchent le contact avec le plateau de chargement (4).

6. Procédé selon la revendication 5, **caractérisé en ce que** les éléments de mise en contact sont positionnés sous les plateaux de chargement (4) posés sur le tapis roulant (6) avant que les éléments de mise en contact soient mis en contact avec le plateau de chargement (4).

7. Procédé selon l'une des revendications 5 à 6, comprenant en outre l'étape de procédé consistant en ce qu'un autre plateau de chargement (4) est convoyé par le tapis roulant (6) pendant que le convoyeur de charge (4) mis en contact avec les éléments de mise en contact (12) est arrêté par les éléments de mise en contact (12).
